# EUROPÄISCHE PATENTSCHRIFT

(11) **EP 2 163 352 B1**
(45) Veröffentlichungstag und Bekanntmachung des Hinweises auf die Patenterteilung: **02.07.2014**
(21) Anmeldenummer: 09090011.9
(22) Anmeldetag: 31.07.2009
(51) Int. Cl.: B25C 5/11, F24D 3/14, B25C 5/13

(54) **Vorrichtung zum Fixieren von Rohren oder ähnlichen Gegenständen auf einem Untergrund**
Device for fixing pipes or similar objects to a base
Dispositif de fixation de tuyaux ou d'objets similaires sur un sol

(30) Priorität: 12.09.2008 DE 202008012366 U
(43) Veröffentlichungstag der Anmeldung: 17.03.2010
(73) Patentinhaber: KERMI GmbH, 94447 Plattling (DE)
(72) Erfinder: Eberl, Markus, 94563 Otzing (DE)
(74) Vertreter: Patentanwälte Bressel und Partner mbB

(56) Entgegenhaltungen:
- DE-A1- 3 439 223
- DE-U1- 8 706 929
- DE-U1-202004 011 405
- GB-A- 1 393 618

## Beschreibung

Die Erfindung betrifft eine Vorrichtung zum Fixieren von Rohren, Kabeln, Schläuchen etc. auf einen Untergrund bzw. einer Verlegungsfläche. Vorzugsweise handelt es sich dabei um so genannte Tacker- oder Setzgeräte zum Befestigen von Rohren auf einer Verlegungsfläche für Fußbodenheizungen. Verfahren, bei denen die Heizungsrohre mittels Befestigungselementen wie z. B. Halteclipsen oder Klammern auf einer Isolationsschicht befestigt werden, sind seit langem bekannt. Der sichere Halt der Klammern oder Clipse im Untergrund ist dabei meist durch deren Formgebung gegeben. Zum Einbringen der Halteclipse oder Klammern in den Isolationsuntergrund werden von Hand betätigte Tacker- oder Setzgeräte eingesetzt, wobei die Klammern in Magazinen gelagert sind, die mit der Vorrichtung in einem funktionalen Zusammenhang zur Vereinzelung und zum Auswurf der Klammern stehen.
Derartige Vorrichtungen werden z.B. in den Druckschriften DE 87 06 929, DE 198 61 052,
DE 3309475 A1, DE 199 33 340 A1, DE 202 01 020 U1, DE 20 2006 005 634 U1 beschrieben. Bei allen bekannten Vorrichtungen erfolgt der Auswurf der Klammern und deren Eindrücken in den Untergrund bei formschlüssiger Halterung der Rohre mit Hilfe einer per Hand betätigbaren federbelasteten Setzstange, die dafür einen Handgriff aufweist. Da aber meist eine Vielzahl von derartigen Klammern in den Untergrund zur Befestigung der Rohre bei der Erstellung einer Fußbodenheizung eingebracht werden müssen, stellen diese Vorrichtungen eine enorme Kraftbeanspruchung für den Monteur dar. Durch ungenaue Passungen entsteht weiter ein hoher Verschleiß und es kommt zur Spanbildung durch Abrieb durch den in einem Gehäuse geführten Schieber.

Aus der DE 34 39 223 A1 ist eine gattungsgemäße Vorrichtung bekannt mit deren Hilfe eine maschinelle Befestigung erfolgen soll. Der Stößel soll danach durch einen Motor bewegbar sein. In der Beschreibung werden dazu aber keine weiteren Ausführungen gemacht.

Die Aufgabe der Erfindung besteht deshalb darin, die aus dem Stand der Technik bekannten Vorrichtungen zu verbessern, wodurch die Befestigung der Rohre auf einem Isolationsuntergrund für den Monteur wesentlich vereinfacht werden soll.

Erfindungsgemäß wird diese Aufgabe durch die Merkmale des Anspruchs 1 gelöst. Vorteilhafte Weiterbildungen der Erfindung sind in den zugehörigen Ansprüchen enthalten.

Mit der erfindungsgemäßen Vorrichtung können die Rohre für eine Fußbodenheizung auf einer Dämmung oder Isolationsunterlage mit Befestigungselementen, vorzugsweise u-förmig gebogenen Klammern, Clips oder Tackernadeln befestigt werden. Dabei wird zunächst durch Muskelkraft durch einen Kolben ein Überdruck aufgebaut, der mit Hilfe eines Druckkraftübersetzers erhöht wird. Damit wird ein Pneumatikzylinder angesteuert, der dadurch ein Befestigungselement über ein Rohr platziert in der Dämmung fixiert.
Dabei kann eine kontinuierlich gleich bleibende Kraft N auf ein Befestigungselement ausgeübt werden. Gegenüber bekannten Systemen wird eine hohe Maßhaltigkeit erreicht, weil keine direkte Verbindung mehr zwischen dem Schieber und Handgriff besteht. Nur durch den von den Kolben bzw. Kompressor erzeugten Überdruck wird der pneumatische Zylinder in Bewegung versetzt. Durch den Druckübersetzer wird mit wenig Kraftaufwand ein hoher Wirkungsgrad ermöglicht. Die Befestigungselemente werden durch den pneumatischen Zylinder geführt und nicht durch die Haltestange. Bei der Führung entsteht dadurch kein Verschleiß, was zu einer hohen Langlebigkeit und Wartungsfreiheit führt.

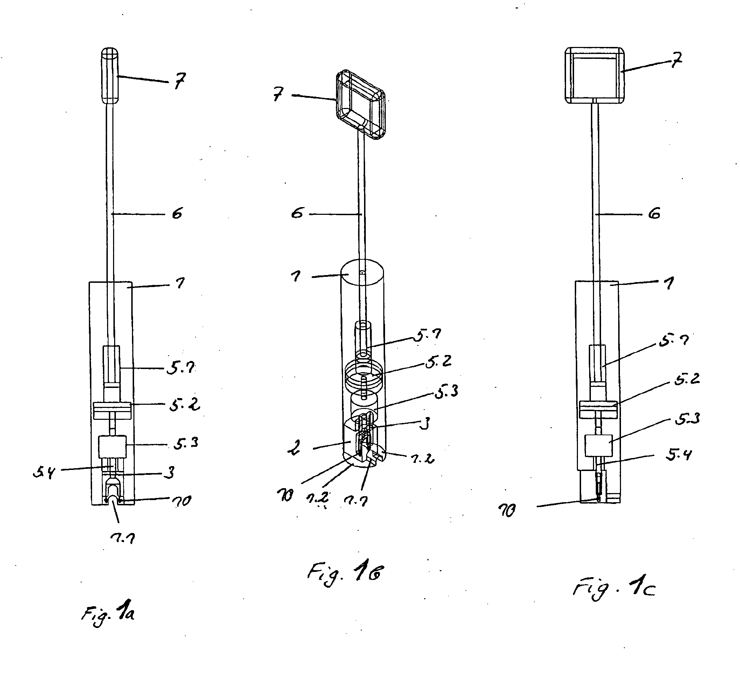

Die Figuren 1a - 1c zeigen in verschiedenen Ansichten eine Variante der erfindungsgemäßen Vorrichtung.

Die erfindungsgemäße Vorrichtung besteht nach Fig. 1a - 1c aus einem Gehäuse 1, in welchem ein Magazinhalter 2 für die Bevorratung der Befestigungselemente 10 und ein Schieber 3 zur Abtrennung und Ausgabe der Befestigungselemente angeordnet sind. Der Schieber 3 wird über eine Druckverstärkungseinrichtung 5 in Aktion versetzt, die mit einer Betätigungsstange 6 mit einem Handgriff 7 in Verbindung steht. Die Druckverstärkungseinrichtung 5 umfasst einen an der Betätigungsstange 6 befestigten Kolben 5.1, einen Kolben 5.2 mit größerer Oberfläche, einen Pneumatikzylinder 5.3 und eine Kolbenstange 5.4. An seiner Unterseite weist das Gehäuse 1 eine Rohrführung 1.1 und seitliche Auflagestützen 1.2 auf. Die Vorrichtung wird mittels der seitlichen Auflagestützen 1.2 über ein Rohr (nicht dargestellt) platziert und durch die Rohrführung 1.1 fixiert. Danach wird zunächst mit Muskelkraft der Handgriff 7 nach unten gedrückt. Der an der Betätigungsstange 6 befestigte Kolben 5.1 erzeugt dabei einen pneumatischen Überdruck p₁ Der Überdruck p₁ wird auf die Kolbenfläche des Kolbens 5.2 übertragen. Der dabei erzeugte Druck p₂ betätigt den pneumatischen Zylinder 5.3 (z.B. Schlagzylinder) der die Eigenschaft hat bei erreichen eines nicht definierten Drucks schnell auszufahren und den Schieber 3 zu betätigen. Der Schieber 3 vereinzelt ein Befestigungselement 10 aus dem Magazinhalter 2 und drückt diese über das Rohr in die Dämmschicht oder Unterlage zur Fixierung des Rohres auf der Unterlage ohne dabei das Rohr zu beschädigen. Nach Beendigung des Vorgangs wird der Griff 7 nach oben bewegt, wobei durch den entstehenden Unterdruck wird Luft angesaugt wird. Durch den Einbau eines Filters an der Ansaugseite kann ein Staubschutz realisiert werden.

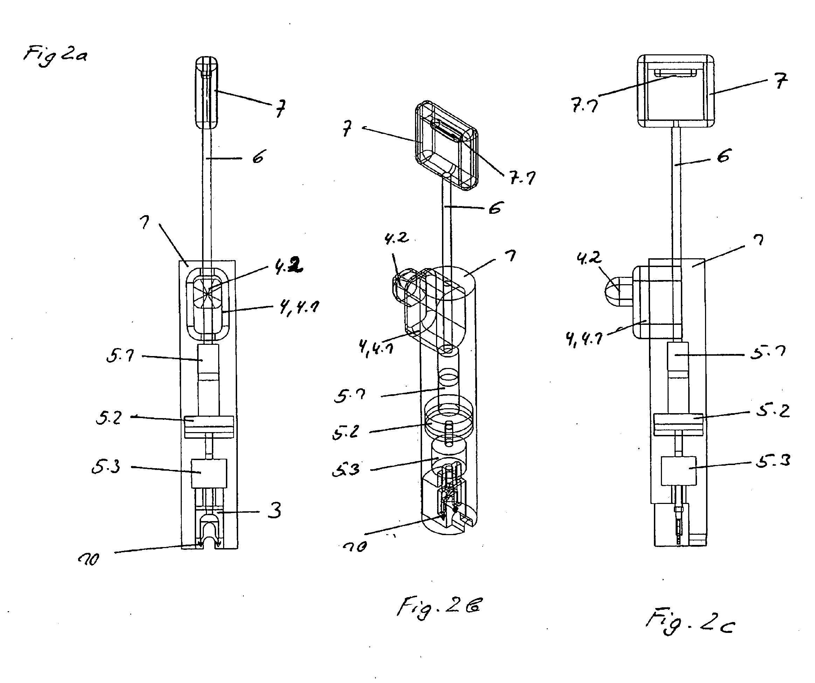

Die Figuren 2a - 2c zeigen eine weitere Variante der erfindungsgemäßen Vorrichtung.

Nach einer besonderen Ausführung (Fig. 2a - 2c) der Erfindung ist nämlich vorgesehen, den Kolben 5.1 mit Druckluft anzusteuern, die in einem Kompressor 4 erzeugt wird und in einen Druckspeicher 4.1 gespeist wird und über ein Ventil (nicht dargestellt) gedrosselt an den Kolben 5.1 freigegeben wird, wenn ein am Handgriff 7 vorgesehener Schalter 7.1 betätigt wird. Der Kompressor kann als Akku-Kompressor (mit Wechselakku 4.2 und wieder aufladbar) ausgeführt sein. Mit Hilfe des Druckspeichers 4.1 kann der Kompressor 4 entlastet werden und muss nicht bei jedem Arbeitsgang Druckluft erzeugen. Der Kolben 5.1 drückt wiederum auf die größere Oberfläche eines Kolbens 5.2. Durch diese Art von Druckübersetzung ist es möglich auf einen höheren aufzubauen als im Kompressor 4 erzeugt wurde. Die erzeugt Druckluft wird an einen Pneumatikzylinder (Schlagzylinder) 5.3 geleitet. Der Kolben fährt aus und drückt mit Hilfe des Schiebers 3 eine Klammer 10 oder dgl. über das Rohr und fixiert dieses mit der Unterlage.

## Patentansprüche

1. Vorrichtung zum Fixieren von Rohren, Kabeln, Schläuchen etc. auf einen Untergrund, insbesondere einer Verlegungsfläche für Fußbodenheizungsrohre mittels Befestigungselementen, bestehend aus einem Gehäuse (1), mit einer Rohrführung (1.1) und den seitlichen Auflagestützen (1.2), einem Magazin (2) für die Aufnahme der Befestigungselemente (10), einer Betätigungsstange (6) mit einem Handgriff (7) und einem Schieber (3) zur Abtrennung und Ausgabe der Befestigungselemente (10) aus dem Magazin (2), **dadurch gekennzeichnet, dass** der Schieber (3) über eine Druckverstärkungseinrichtung (5) in Aktion versetzbar ist, die mit der Betätigungsstange (6) in Wirkverbindung steht, wobei die Druckverstärkungseinrichtung (5) einen an der Betätigungsstange (6) befestigten Kolben (5.1), einen Kolben (5.2) mit größerer Oberfläche, einen Pneumatikzylinder (5.3) und eine Kolbenstange (5.4) umfasst.

2. Vorrichtung nach Anspruch 1, **dadurch gekennzeichnet, dass** an der Ansaugseite ein Filter (8) als Staubschutz vorgesehen ist.

3. Vorrichtung nach den Ansprüchen 1 und 2, **dadurch gekennzeichnet, dass** die Druckverstärkungseinrichtung (5) mit einem Kompressor (4) mit Druckspeicher (4.1) in Verbindung steht und der Druckspeicher (4.1) über ein Ventil mit dem Kolben (5.1) druckdicht verbunden ist.

4. Vorrichtung nach den Ansprüchen 1 bis 3, **dadurch gekennzeichnet, dass** der Kolben (5.1) mit einem Ventil in Verbindung steht, welches mittels eines Kompressor (4) erzeugte und in einen Druckspeicher (4.1) gespeiste Druckluft gedrosselt an den Kolben (5.1) freigibt.

5. Vorrichtung nach den Ansprüchen 1 bis 4, **dadurch gekennzeichnet, dass** der Handgriff (7) einen Schalter (7.1) aufweist, der mit einem Ventil in einem funktionalen Wirkzusammenhang steht.

6. Vorrichtung nach den Ansprüchen 1 bis 5, **dadurch gekennzeichnet, dass** der Pneumatikzylinder (5.3) als Schlagzylinder ausgeführt ist.

7. Vorrichtung nach den Ansprüchen 1 bis 6, **dadurch gekennzeichnet, dass** der Kompressor (4) als Akku-Kompressor (mit Wechselakku 4.2 und wieder aufladbar) ausgeführt ist.

## Claims

1. Device for fixing pipes, cables, hoses etc. on a base, in particular a laying surface for floor heating pipes by means of fixing elements, comprising a housing (1), with a pipe guide (1.1) and the lateral resting supports (1.2), a magazine (2) to hold the fixing elements (10), an actuating rod (6) with a handle (7) and a slider (3) to separate and output the fixing elements (10) from the magazine (2), **characterised in that** the slider (3) can be moved during action by means of a pressure amplifying device (5), which is in a functional connection to the actuating rod (6), wherein the pressure amplifying device (5) comprises a piston (5.1) fastened to the actuating rod (6), a piston (5.2) with a larger surface, a pneumatic cylinder (5.3) and a piston rod (5.4).

2. Device according to claim 1, **characterised in that** on the intake side, a filter (8) is provided as protection against dust.

3. Device according to claims 1 and 2, **characterised in that** the pressure amplifying device (5) is connected to a compressor (4) with a pressure reservoir (4.1), and the pressure reservoir (4.1) is connected in a pressure-tight manner to the piston (5.1) by means of a valve.

4. Device according to claims 1 to 3, **characterised in that** the piston (5.1) is connected to a valve which releases in a throttled manner to the piston (5.1) compressed air generated by means of a compressor (4) and fed into a pressure reservoir (4.1).

5. Device according to any one of the claims 1 to 4, **characterised in that** the handle (7) has a switch (7.1) which is in a functional interaction with a valve.

6. Device according to any one of the claims 1 to 5, **characterised in that** the pneumatic cylinder (5.3) is made as an impact cylinder.

7. Device according to claims 1 to 6, **characterised in that** the compressor (4) is made as an accumulator compressor (with a rechargeable battery 4.2 and being rechargeable).

## Revendications

1. Dispositif servant à fixer des tuyaux, câbles, tuyaux flexibles, etc. sur un sol, en particulier sur une surface de pose pour des tuyaux de chauffage de plancher au moyen d'éléments de fixation, constitué d'un boîtier (1), d'un guidage de tuyau (1.1) et d'un support d'appui (1.2) latéral, d'un magasin (2) pour le logement des éléments de fixation (10), d'une tige d'actionnement (6) dotée d'une poignée (7) et d'un coulisseau (3) servant à séparer et à répartir les éléments de fixation (10) hors du magasin (2), **caractérisé en ce que** le coulisseau (3) peut être amené en action par l'intermédiaire d'un dispositif d'amplification de pression (5), lequel se trouve en liaison fonctionnelle avec la tige d'actionnement (6), sachant que le dispositif d'amplification de pression (5) comprend un piston (5.1) fixé au niveau de la tige d'actionnement (6), un piston (5.2) présentant une plus grande surface, un vérin pneumatique (5.3) et une tige de piston (5.4).

2. Dispositif selon la revendication 1, **caractérisé en ce qu'**un filtre (8) est prévu sous la forme d'un système de protection contre la poussière au niveau du côté d'aspiration.

3. Dispositif selon les revendications 1 et 2, **caractérisé en ce que** le dispositif d'amplification de pression (5) est en relation avec un compresseur (4) doté d'un accumulateur de pression (4.1), et **en ce que** l'accumulateur de pression (4.1) est relié de manière étanche à la pression au piston (5.1) par l'intermédiaire d'une soupape.

4. Dispositif selon les revendications 1 à 3, **caractérisé en ce que** le piston (5.1) est en liaison avec une soupape, laquelle libère de l'air comprimé produit au moyen d'un compresseur (4) et injecté dans un accumulateur de pression (4.1) de manière étranglée au niveau du piston (5.1).

5. Dispositif selon les revendications 1 à 4, **caractérisé en ce que** la poignée (7) présente un commutateur (7.1), qui est en liaison fonctionnelle avec une soupape.

6. Dispositif selon les revendications 1 à 5, **caractérisé en ce que** le vérin pneumatique (5.3) est réalisé sous la forme d'un vérin à impact.

7. Dispositif selon les revendications 1 à 6, **caractérisé en ce que** le compresseur (4) est réalisé sous la forme d'un compresseur à pile (avec pile de remplacement (4.2) et pile rechargeable)
